# EUROPEAN PATENT SPECIFICATION

(11) **EP 0 656 973 B1**
(45) Date of publication and mention of the grant of the patent: **12.01.2000**
(21) Application number: 93920150.5
(22) Date of filing: 17.08.1993
(51) Int. Cl.: E02D 3/00, E02D 3/11, B09B 1/00, C03B 5/02, B09C 1/06, C10B 53/00, E21B 43/295

(54) **METHOD FOR IN-SITU TREATMENT OF LANDFILL WASTE AND CONTAMINATED SOIL**
VERFAHREN ZUR ÖRTLICHEN BEHANDLUNG VON GELÄNDE-AUFSCHÜTTUNGSABFALL UND VERUNREINIGTER ERDE
PROCEDE DE TRAITEMENT IN-SITU DE DECHETS DE DECHARGES PUBLIQUES ET DE SOLS CONTAMINES

(30) Priority: 19.08.1992 US 931962; 09.09.1992 US 944890
(43) Date of publication of application: 14.06.1995
(73) Proprietor: CIRCEO, Louis J., Jr., Atlanta, GA 30319 (US); CAMACHO, Salvador L., Raleigh, NC 27612 (US)
(72) Inventor: CIRCEO, Louis J., Jr., Atlanta, GA 30319 (US); CAMACHO, Salvador L., Raleigh, NC 27612 (US)
(74) Representative: Woodward, John Calvin
(86) International application number: US9307748
(87) International publication number: WO9404761

(56) References cited:
- SU-A- 630 338
- SU-A- 685 762
- SU-A- 905 370
- US-A- 4 376 598
- US-A- 5 004 373
- US-A- 5 011 329
- US-A- 5 100 259
- CIVIL ENGINEERING, vol. 58, October 1963, LONDON GB, pages 1243-1245, XP002020468 "Engineering developments in the USSR"

## Description

### FIELD OF INVENTION

The invention disclosed relates to the field of remediation and vitrification of waste materials including soils containing hazardous materials and residential and industrial waste as found in a landfill site.

### BACKGROUND OF THE INVENTION

The present invention provides a method adapted to apply a high temperature plasma arc flame to remediate, vitrify and decontaminate various types of waste.

A first embodiment of the invention is concerned with the need to increase the capacity and safety for disposing of residential and industrial wastes. This problem relates to public dumping facilities, generally known as landfill sites. Everyone generates waste, and yet no one wants to have a waste disposal site or a waste incinerator nearby. The reasons for this public dislike of waste disposal facilities ranges from airborne toxic hazards, to leaching of dangerous chemicals into the groundwater, to unpleasant odors and to reduction in real estate values.

Despite this generally held dislike for landfills, the need for more waste disposal capacity keeps growing. We produce more waste each year and the existing landfills are rapidly approaching the point of being filled to capacity. The problem encompasses residential waste such as bio-degradable and non-biodegradable garbage and industrial waste including scrap materials, chemical residues, sludge, mill tailings, and other forms of waste, some of which may be hazardous, toxic or radioactive. Common municipal solid waste is being generated at the rate of over 200 million tons per year. Over ninety percent (90%) of this waste is deposited in landfills. Efforts at recycling, while helpful, fall far short of coping with the problem.

A typical landfill contains a great variety of materials, only a small number of which will decompose naturally. A weight analysis of landfill components by category indicates paper products (41%), glass and metal (16.9%), plastics (6.5%), rubber and textiles (4.3%), yard waste (17.9%), wood (3.7%) and food (7.9%).

The process of incineration deals somewhat with the capacity problem, but it simultaneously creates other problems, such as pollution, odors, acid rain, depletion of fuels, etc. Incineration, by its nature, is a combustion process and, therefore, generates a number of gaseous products which range from unpleasant to dangerous.

Another serious contemporary problem addressed by a second preferred embodiment is the accidental spilling or intentional discarding of toxic or environmentally hazardous materials comprising both organic and inorganic contaminants. These injurious materials may be liquid or solid, and may be at the ground surface or buried. When such a situation occurs, the land affected can be permanently destroyed for productive use, or at least until an expensive clean-up process is accomplished. In addition to the effect on the soil, such contaminating wastes often find their way into streams, rivers and municipal water supplies, causing untold damage and potential sickness. Such hazardous waste materials include, by way of example, petroleum products, chemicals, mine tailings, sludges, and low-level radioactive materials whether exposed or contained in metal drums or underground storage tanks.

The sort of operations to clean up waste spills which have been done in the past have involved excavating the contaminated soils or objects, and transporting them to a treatment facility or to a safe storage site. Alternatively, means of remediating contaminated soil in-situ have been outlined in United States Patent 4,376,598 to Brouns et al., for "In Situ Vitrification of Soil". The '598 patent teaches the insertion of two or more conductive graphite electrodes into the soil, providing a conductive electrical path on the surface of the soil, and generating a current through the electrical path to heat the surrounding soil to its melting temperature. Once a melted soil stream has been established between electrodes, the molten soil provides the conductive path. However, this method has several drawbacks; e.g., soil melting must begin at the ground surface and proceed downward, it cannot operate at deep depths or at selective depths, the continuity of the soil electrical path is not reliable, and restarting the current flow once the melt has moved below ground surface level is quite difficult. In addition, since processing temperatures are below 2000°C, soil additives may be necessary to lower the melting point of particular soils, and the method does not work well if there is too much metal or moisture in the soil.

The invention disclosed herein recognizes that there exists a relatively new technology which may be employed in the remediation of all contaminated soils, buried materials or landfill waste by the process of pyrolysis, melting and vitrification of waste materials using large quantities of very high temperature heat energy. The basic tool used in this technology is the plasma arc torch. Plasma arc torches can routinely operate at energy levels ranging from 100 kw to 10 Mw. Plasma torches produce temperatures of 4000°C to 7000°C in the range of 85 - 93% electric to heat energy conversion efficiency. For purposes of comparison, the highest temperature attainable by fuel combustion sources or the aforementioned graphite electrode process is in the vicinity of 2700°C.

A plasma arc torch operates by causing a high energy electric arc to form across a stream of plasma, or ionized gas, thus generating large amounts of heat energy. There are many types of plasma torches, but all torches generally fall into one of two basic categories according to the arc configuration relative to the torch electrodes, i.e., transferred arc type and non-transferred arc type. The arc of a transferred arc torch is formed by and jumps from a single electrode on the torch, across the plasma gas, and to an external electrode which is connected to the opposite electrical terminal. The arc of a non-transferred arc torch is formed by and jumps from one electrode on the torch along the plasma gas and back to another electrode on the torch. In the plasma arc torch, the heat energy produced is proportional to the length of the arc, assuming the type of plasma gas and applied electrical current both remain constant.

Pyrolysis is a chemical decomposition of materials due to the action of heat. Pyrolysis is distinct from combustion in that oxygen is not present and, therefore, the resulting chemical products are different. When pyrolysis of materials is accomplished under sufficiently hot conditions, some gases (potentially useful as fuel) are generated due to decomposition of the organic compounds, and the residue from the waste materials is melted and solidified (vitrified), thus greatly reducing its volume. The chemical composition of the gases generated by pyrolysis can be controlled by the introduction of specific additives, such as steam.

Since the present invention makes use of a plasma arc torch, reference is next made to United States Patent 4,067,390 granted to the present mventors for "Apparatus And Method For The Recovery Of Fuel Products From Subterranean Deposits of Carbonaceous Matter Using A Plasma Arc" which patent teaches the use of a plasma arc torch to gasify or to liquify underground deposits of coal, oil, oil shale, tar sands and other carbonaceous materials. The teachings of the '390 patent are incorporated hereby by reference.

It is a major objective of the invention to afford an efficient and environmentally safe system for the in-situ remediation of soils containing hazardous materials and other buried contaminants such as metal drums of waste matter, underground storage tanks and other toxic deposits.

It is a further objective of the invention to prevent the leaching and spread of contaminated matenal to the surrounding soil medium and to the subterranean water system.

It is an additional objective of the invention to pyrolize, remediate and vitrify municipal and industrial waste materials as typically found in a landfill.

Additional objectives of the invention will become apparent from the disclosure which follows.

### SUMMARY OF THE INVENTION

A first preferred embodiment of the present invention provides a method and apparatus for reducing the volume of landfill waste products in a safe manner and for generating and collecting potentially useful gases at the same time.

According to the invention, there is provided a method of treating waste matenal in-situ, comprising the steps of forming a borehole to a predetermined depth in said waste material, inserting a plasma arc torch into the borehole, energising the plasma arc torch to pyrolyse and vitrify waste material in its vicinity; de-energising the plasma arc torch, removing the plasma arc torch from the borehole, and allowing said molten waste matenal to cool and solidify thereby to produce a vitrified residue substantially less in volume than the waste material from which it was produced.

According to the invention, there is also provided a method of treating hazardous waste contaminated soil, the contamination extending to only a shallow depth below the surface of the soil, comprising suspending a plasma arc torch above the contaminated soil, energising the plasma arc torch to pyrolyse and vitrify the contaminated soil in its vicinity, de-energising the plasma arc torch, removing the plasma arc torch from the borehole, and allowing said molten waste material to cool and solidify thereby to produce a vitrified residue substantially less in volume than the waste material from which it was produced.

Useful gases for cogeneration or as an alternate fuel source are simultaneously generated, collected and cleaned; i.e., the effluent gases must be treated to ensure that no hazardous effluents are released to the atmosphere. Due to the natural low density of landfill wastes, the vitrified waste materials are considerably more compact than the original waste materials. As the waste becomes more melted, a molten pool forms, a void is created around the torch and additional waste falls into the molten pool, adding to the melt. As the level of the molten pool rises and approaches the plasma torch, the torch is raised in the borehole to a new operating level. This process is repeated in successive holes throughout the landfill until the entire landfill has been treated and the surface level of waste has subsided to near the bottom of the landfill basin. When the reduction of the waste volume has been completed, the process of filling with added municipal or industrial waste is resumed. The entire procedure of pyrolysis and vitrification is repeated a number of times over a number of years until the level of vitrified matenal residue builds up to where it is at or near the original ground level. Thus, the landfill is fully remediated, the useful life of the landfill has been extended and a firm, inert foundation for construction has been established.

A preferred embodiment of the invention utilises plasma torch heating for the remediation by in-situ pyrolysis and vitrification of hazardous waste sites, spills or deposits buried at any depth below the ground surface. A series of boreholes are formed throughout a contaminated area in an array such that the perimeters of the vitrified, solidified or remediated columns which are formed will coalesce together. A plasma arc torch is inserted, energized and moved within each borehole so as to form a column of material which has been remediated by pyrolysis of the organic material in the soil and vitrification of the surrounding contaminated inorganic soils and buried materials. The gases generated in this process are collected at the top of each borehole and treated as required. Upon cooling, the molten mass solidifies into a dense, inert, vitrified mass which effectively immobilizes and neutralizes any remaining contaminants. Certain contaminants may be remediated within solidified or devolatilized zones which extend beyond the vitrified zone. In these situations, the borehole spacing would be increased.

### BRIEF DESCRIPTION OF THE DRAWINGS

Figure 1 is a schematic representation presented as a series of steps A - H of a landfill site portraying the method of the invention being practiced sequentially over time to minimize the volume of waste while maximizing landfill life and land utilization.

Figure 2 is a sectional elevational view of the method and apparatus of the invention illustrating a plasma torch installed in a drilled hole extending to the bottom of a landfill and a gas collecting hood assembled above the processing hole.

Figure 3 is a flow chart representation of the process of the invention indicating the input and output products.

Figure 4 is a plan view of the surface of a landfill site after treatment according to the invention, showing the original borehole locations in dashed lines.

Figure 5 is a sectional elevation view of a typical hazardous spill site showing the contaminated areas of soil radiating from the initial spill location into the surrounding soil.

Figure 6 is the view of Figure 5 with an initial borehole formed into the earth, with a plasma torch inserted in the borehole and with a gas collector positioned above the borehole according to the invention.

Figure 7 is a top plan view of an area of a hazardous material spill showing a typical pattern of boreholes drilled at an extended spacing and the resultant coalesced columns of melted, solidified and devolatilized soil treated to immobilize and remediate the contamination.

Figure 8A is a sectional elevation view of an underground site containing buried drums of hazardous materials, with contaminated material radiating into the surrounding soil.

Figure 8B is a sectional elevation view of an underground site having a subterranean liquid storage tank, with contaminated material radiating from a leak in the storage tank.

Figure 9 is a perspective illustration of leachate cutoff walls and a containment basin established according to the present invention.

Figure 10 is a sectional elevation view of a site of a hazardous liquid surface spill having leached into surrounding soil to a small extent and a plasma torch suspended above the spill site.

### DESCRIPTION OF THE PREFERRED EMBODIMENT

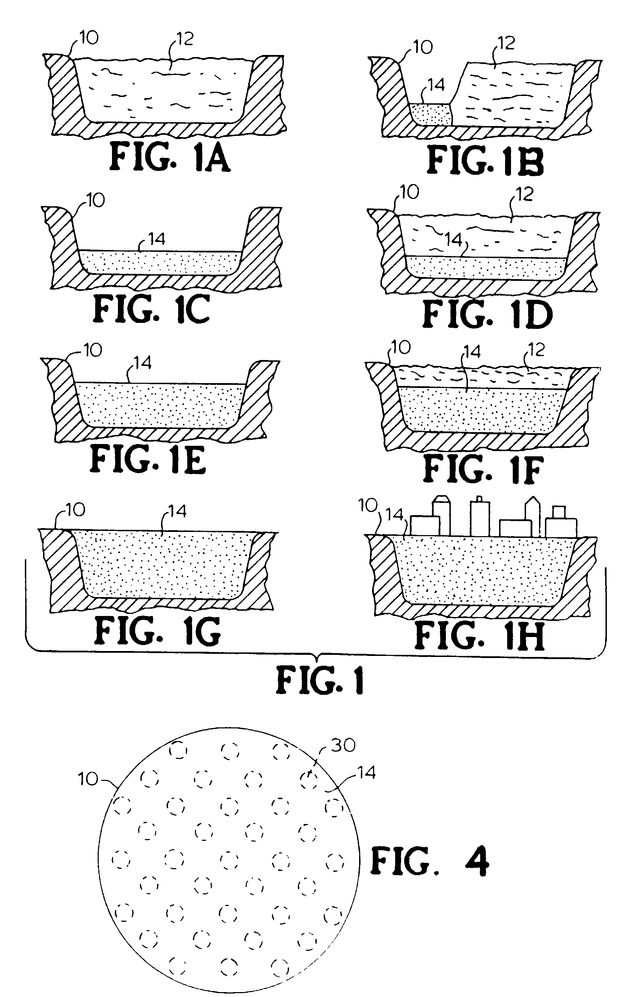

Depicted in a series of process steps of the second preferred embodiment in section view in Figure 1, basin 10 is a natural or manmade cavity in the surface of the earth which serves as the site of a typical landfill into which materials are dumped until no more space is available. At that time, the waste material can be completely remediated and a volume reduction according to the present invention may be employed to increase the life and effective capacity of the site. In Figure 1, step A, the landfill basin 10 is filled with waste materials 12 to approximately its capacity. According to the method and by utilizing the apparatus of the invention, as will be described in detail later, waste remediation and a significant reduction in the volume of the former waste material 12 may be accomplished.

The result of the first phase of remediation and reduction in waste volume is illustrated in Figure 1, step B, wherein the basin 10 still contains untreated waste materials 12 and treated, or vitrified residue 14. As it is shown, the pyrolysis and vitrification process to be described effectively reduces the volume of material in comparison to the untreated waste material 12.

The treatment process is continued in successive locations throughout the landfill area until a condition approximating that portrayed in Figure 1C is reached in which all the waste materials which had previously filled basin 10 are now remediated and reduced by pyrolysis and vitrification to a fraction of their original size in the form of a hard, glass-like, vitrified residue 14. Optionally, multiple locations of waste within a landfill site may be treated simultaneously so as to reduce the time required for the total process. Thereafter, for a period of time, additional waste material 12 may be deposited into basin 10 on top of vitrified residue 14 until the level of waste materials 12 again reaches the maximum volume capacity as shown in Figure 1D.

A process approximating that described above in regard to the steps of Figure 1B and 1C is undertaken again to result in a volume of vitrified residue 14 as illustrated in Figure 1E. The resultant volume of vitrified residue 14 as represented in Figure 1E is the total amount from the first and second vitrification processes shown in Figures 1C and 1E.

Subsequently, additional waste material 12 is dumped into the basin 10 to arrive at the condition shown in Figure 1F, which, after several cycles of this process, will be followed by a further pyrolysis and vitrification process resulting in a vitrified residue 14 which, after several cycles of the inventive process, ultimately approximates the maximum capacity of basin 10 as shown in Figure 1G. The actual number of steps required to complete this sequential vitrification process and result in a vitrified residue 14 which is substantially level with the top of basin 10 will vary according to a number of factors such as the waste composition and depth. Figure 1 is therefore a somewhat simplified sequence for purposes of illustration.

When the vitrified residue 14 is at or near the level of the earth surrounding basin 10, and due to the extremely hard, dense and inert nature of vitrified residue 14, it is possible and useful to construct upon vitrified residue 14, returning the land to a further useful purpose, as illustrated in Figure 1H. The exposure of waste materials 12 to the extremely high temperatures of the invention process (discussed below), in addition to reducing volume of waste, effectively neutralizes, gasifies, or immobilizes the original contaminants and low level radioactive materials, thus making a safe and strong base for future construction. Whereas the typical filled landfill site is totally unsuited and hazardous as a building site because of subterranean toxic materials, settlement and potentially explosive gases, the method of the invention, by contrast, provides the mentioned strong and safe foundation for future construction.

In addition to providing a societally useful purpose for the landfill site after it has filled all available space, the second embodiment of the invention has, as described above, effectively remediated the waste materials, increased the useful life and effective capacity of the landfill site to a substantial extent, and reclaimed commercially useful gases.

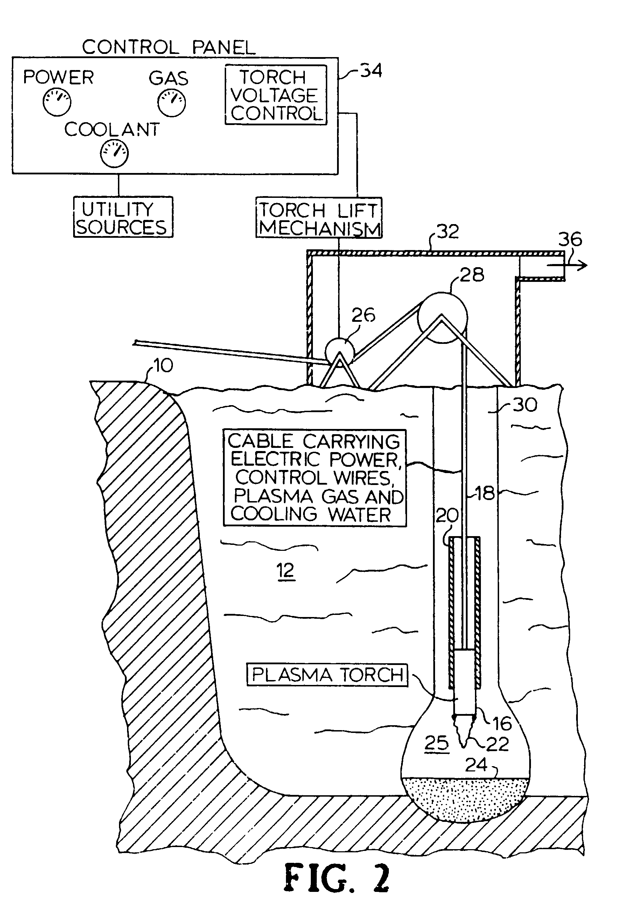

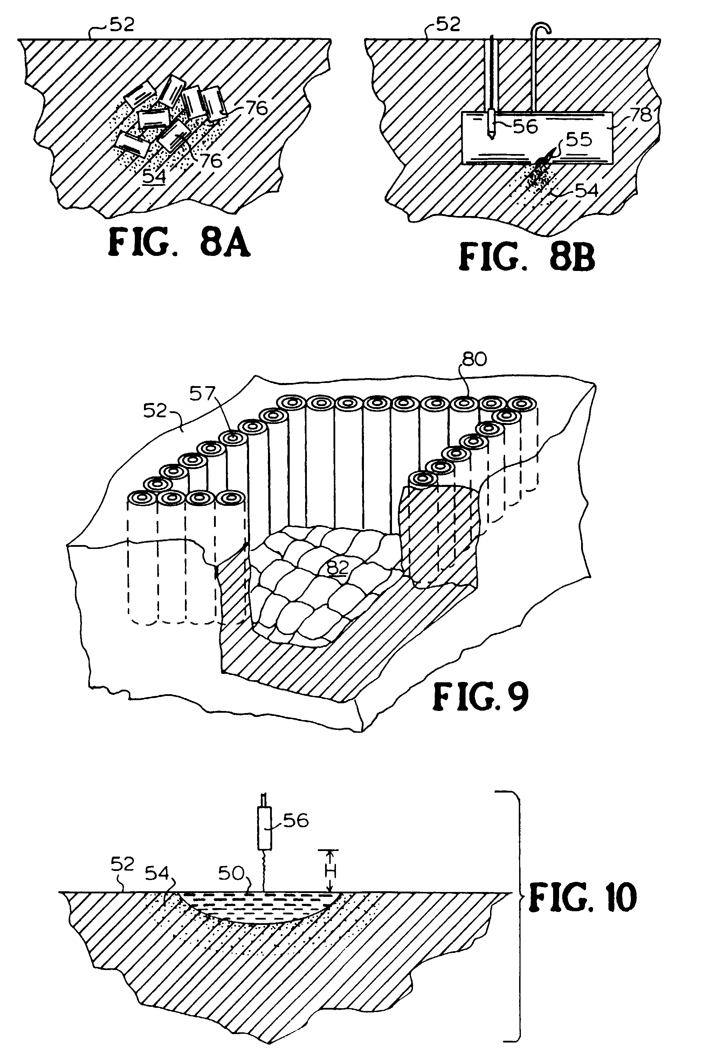

A typical plasma arc torch which is suitable for treating waste materials has a one megawatt electrical power rating and is of cylindrical shape, approximately 22 cm in diameter. It is preferred, in reference to Figures 2 and 8, that the diameter of the formed hole be 5 - 10 cm larger than the diameter of the plasma torch. Therefore, as illustrated in Figure 2, borehole 30 is formed, e.g. by drilling, to have about a 30 cm diameter for torch clearance. Plasma torches of higher power ratings are generally proportionally larger in diameter. Torches rated at from 300 kw to 10 Mw power rating can be employed according to the requirements of the landfill, provided the hole diameter is appropriate and adequate electrical power is available. A plasma torch applicable to the method and apparatus of the invention is produced by Plasma Energy Corporation, Raleigh, North Carolina, U.S.A. It is generally desirable to insert a substantially rigid tubular casing made of any heat destructible material, such as thin metal, into the drilled borehole 30. The casing acts to prevent sidewall collapse and to facilitate the movement of plasma torch 16 down and up borehole 30. So as to additionally facilitate insertion and movement of plasma torch 16, hole 30 is drilled vertically into the landfill waste mass 12.

Plasma torch 16, preferably with arc forming means operative to form a non-transferred arc, is lowered into cased borehole 30 with plasma gas, electric supply and cooling water lines connected, which utility lines are carried by a common supply conduit 18. A protective heat resistant shroud 20 is provided and extends upwardly from the upper portion of plasma torch 16 to insulate the utility lines carried in supply conduit 18 from the damaging heat travelling connectively upward in hole 30. Plasma torch 16 is energized to generate heat in the range of 4000°C to 7000°C, which is hot enough to readily melt the borehole casing and decompose and pyrolyze the waste materials 12 surrounding hole 30. Torch 16 transmits its heat energy by a combination of radiation and convection. The majority of the convection heat will travel upward along bore hole 30, and the radiation energy will begin to melt the waste materials 12 around bore hole 30 and will create a substantially spherical chamber 25 as the waste melts and collects in a pool of molten waste 24.

Beyond the ability of a plasma arc to operate at exceedingly high temperatures, the energy generated is unusual in its frequency distribution. The energy generated by conventional combustion processes occurs mostly in the infra-red section of the electromagnetic spectrum, largely in the visible light section and marginally in the ultra-violet section. By contrast, the energy generated by a plasma arc will be as much as 29% in the ultra-violet portion of the spectrum. Ultra-violet energy wavelengths are able to penetrate gasses without measurable heat loss and to penetrate solids more quickly and effectively than infra-red wavelengths.

The operating plasma torch 16 utilizes an ionized gas flowing under pressure and forms an electric arc supported by that gas. Input electric power, plasma gas and coolant are each regulated by conventional means (not shown) located within a suitable control panel 34.

As the heat of plasma arc flame 22 pyrolyzes and vitrifies waste materials 12, spherical chamber 25 develops and widens around torch 16. As the level of the molten pool rises and approaches the plasma torch, the torch 16 is raised in the borehole to a new operating level 25, thus providing additional material for plasma torch 16 to pyrolyze into molten waste material 24. Plasma torch 16 may be raised automatically or by manual controls. This process may encompass a volume of up to five (5) meters in diameter, according to the characteristics of the waste 12 and the power level of plasma torch 16.

When a column of the diameter of chamber 25 and a height up to the top of basin 10 is pyrolyzed and the vitrified residue 14 sits at its bottom, plasma torch 16 is deenergized and removed. A torch lifting mechanism 26 and pulley 28 are employed to remove plasma torch 16. A new borehole is formed in another position in the landfill and the process is repeated until the entire volume of the landfill has been treated. The spacing of additional boreholes 30 for treating additional waste material 12 in the landfill will be determined according to the effective diameter of the column achieved at first borehole 30 so as to treat the entire landfill volume and ensure that successive vitrified columns coalesce into a solid mass.

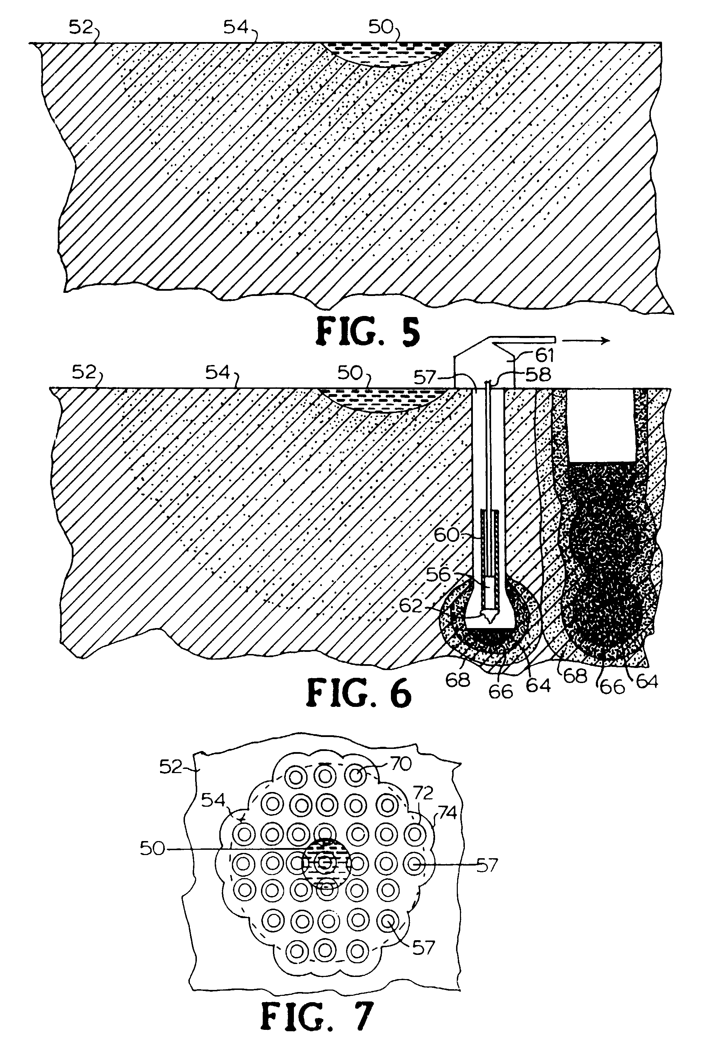

Figure 4 illustrates a typical arrangement of boreholes 30 in a landfill basin 10. Boreholes 30, shown in dashed lines, are separated by a distance such that when the vitrified residue 14 has cooled, the individual vitrified columns will have coalesced together to a substantially solid, continuous mass on which future construction may be built.

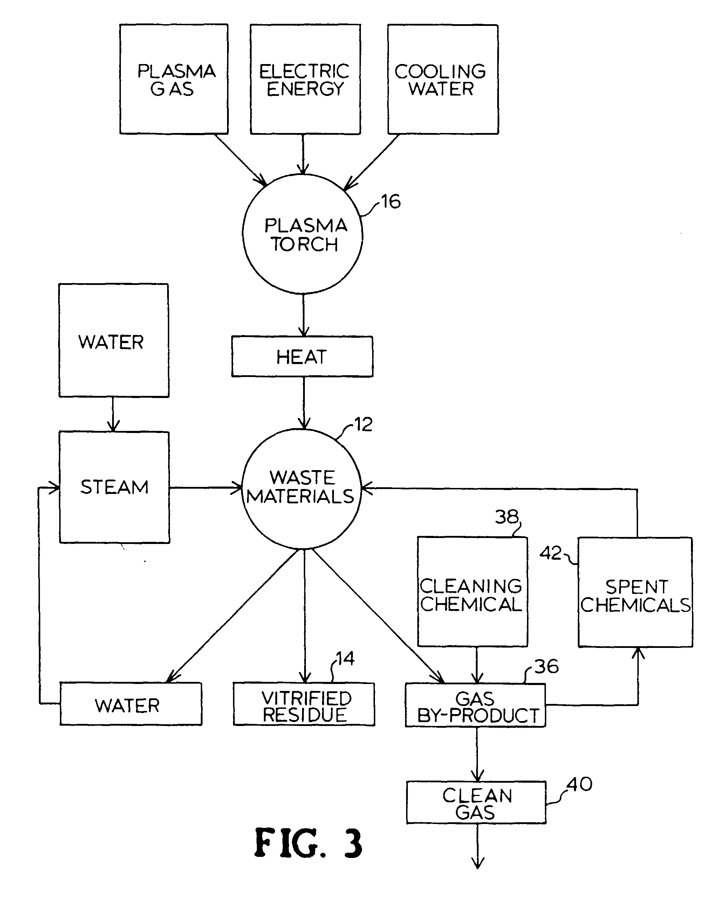

During the described process of melting waste materials 12, the heating occurs in an area accessed by a relatively small diameter borehole 30. In this situation, little if any atmospheric air reaches the site of the high heat application. The plasma gas used may be air, since it is economical and readily available, but the quantity of air supplied to support the plasma arc flame 22 is so much less than the amount needed to burn the quantity of waste being treated as to be negligible. Under conditions of high heat and little air, or oxygen, combustion is not possible. The amount of plasma gas required to sustain an arc is on the order of 10 times less than the amount of air which is required to combust a fuel and generate a similar amount of heat energy. At the same time, pyrolytic chemical reactions, including decomposition of some of the waste materials and further reaction with added steam (see Figure 3) will take place. These chemical reactions give off a variety of gases, some of which are commercially useful, particularly as fuel. These resultant gases include hydrogen, carbon monoxide, carbon dioxide, methane, nitrogen and others. An analysis of typical gases resulting from the process described indicates a total of 27,000 standard cubic feet of gas by-product generated from each ton of typical municipal waste materials pyrolyzed. Processing of industrial or other special waste materials may result in a different volume and different types of gases given off.

A gas collecting hood 32, as shown in Figure 2, is placed over the top of borehole 30 to trap and route the gases produced to a treatment station, such as a cleaning operation, prior to storage for recycling. Gases exit gas collecting hood 32 at arrow 36, representing output gases, and are conducted into a piping system (not shown) for chemical cleaning or scrubbing.

The pyrolysis, remedation and vitrification of waste materials by the plasma torch and the subsequent handling of the gas by-product is depicted in the form of a process chart in Figure 3. Plasma torch 16 is supplied with its three needed inputs, i.e. plasma gas, electric energy and cooling water. The water is not fed as a utility supply to the torch 16, but circulates around and within the body of torch 16 so as to prevent the plasma torch 16 from being destroyed by its own heat. The output from torch 16 is heat energy which is applied to operate on waste materials 12. In order to generate the desired gaseous by-products as described above, it may be necessary to introduce a quantity of water to the materials 12 being treated, in the form of steam which is approximately equal in weight to the quantity of waste material 12 being processed.

The resultant output of the process described comprises vitrified residue 14, gas by-product 36 and water. The water output from the waste treatment process is recycled back into the water supply to make steam. A vitrified residue 14 remains in a column near the bottom of hole 30 (Figure 2), which column will eventually be coalesced with other vitrified columns produced in the landfill. This layer will be the final form after the remediated, molten waste 24 has cooled and solidified. The gas by-product 36 is next transmitted through a cleaning chemical 38 which both filters the gaseous effluent and reacts with it chemically to improve the value of and commercial usefulness the result.

Plasma arc torches as are used in the present invention also are substantially unaffected by the presence of water in the operating environment. These torches, particularly as operated in the non-transferred mode, will operate under water, thus being effective even if the site being treated is partially filled with water, liquid wastes or the like.

By the process described according to the second embodiment above, the volume occupied by waste materials in a landfill is reduced to a small percentage of its original volume in each successive remediation and volume reduction procedure, depending on the nature of the materials treated.

The second embodiment of the invention relates to the problem illustrated, by way of example, in Figure 5, showing a spill of liquid material, hazardous waste 50, onto the upper surface of a section of earth. Over a period of time, the hazardous waste 50 leaches along the surface and into the ground 52, thereby creating contaminated area 54 which extends for some distance in all directions from the original site of the spill. Uncontaminated earth 52 beyond the contaminated area 54 is unaffected, although in sufficient time the leaching will typically continue until the contaminated area 54 encompasses a much larger area and could ultimately reach an underground aquifer which would permit the hazardous waste 50 to migrate along its path of flow. In other situations, the hazardous spill or deposit may be a solid substance or a buried object, but its contaminating effect is also subject to leaching and migration into the surrounding earth and water with the aid of rain.

As shown in Figure 6, a borehole 57 is formed by drilling through the contaminated soil mass 54 to a point just below the maximum depth of contamination and a thin heat-destructible metal casing (not shown) is inserted into the hole. The metal casing serves to prevent collapse of the sidewalls of borehole 57, facilitate the up and down movement of plasma arc torch 56 within the borehole 57, and to permit gases formed by the pyrolysis process to quickly reach the surface for collection and treatment. Next, plasma torch 56 is lowered to a point near the bottom of borehole 57 and is suspended by supply conduit 58 which contains electrical cables, a plasma gas supply line and a coolant water line necessary for torch operation as described above. The process of lowering and raising plasma torch 56 is accomplished by means of appropriate lift equipment (not shown).

The torch 56 is also provided with a protective heat shroud 60 adapted to shield the supply conduit 58 from being damaged by the heat generated. In the treatment of shallow contaminated deposits, this shroud would extend to the ground surface. When energized in the non-transferred mode, as is preferred, plasma arc flame 62 is established at the lowest point in borehole 57 and slowly raised to the top of the hole to gasify, pyrolyze, and melt a column of the surrounding earth and contaminants. Since the plasma torch is capable of creating temperatures in the range of 4000°C to 7000°C, the heat produced gasifies and pyrolyzes all organic materials in the presence of steam in the soil immediately surrounding the borehole. It is preferred according to the subterranean embodiment disclosed to operate plasma torch 56 in the non-transferred arc mode.

The gases are collected at the top of the borehole 57 for treatment, as required, by standard gas treatment technology. A gas collection hood 61 is positioned over borehole 57 to channel the generated gas to a location for treatment. The inorganic materials and the soil are melted and, when allowed to cool, become a virtually unleachable and relatively non-porous, dense vitrified mass.

As depicted in Figure 6, the heat energy from plasma torch 56 radiates in a generally spherical pattern with the greatest degree of heat closest to plasma arc flame 62, and with the temperature lessening with greater distance from the flame 62. Therefore, the area closest plasma flame 62 is completely vitrified and the more distant portions of earth 66, 68 are heated to a lesser degree as will be described below.

Immediately beneath flame 62, molten waste 64 generated at temperatures above 1100°C accumulates in a pool. Beyond the distance to which sufficient heat for soil melting and vitrification has travelled, the curing zone 66 is subjected to sufficient heat (typically 900°C or greater) to cure the earthen material into a brick-like hardness. The third zone in terms of distance from plasma flame 62 is a deplasticized zone 68 which is not cured, but has all liquid permanently removed therefrom by exposure of 200°C or more and effectively becomes a rigid, non-absorbent envelope of soil. The distance to which heat will travel and effectively generate cured zone 66 and deplasticized zone 68 depends upon the power levels generated by plasma torch 56, the moisture content of the soil, and the nature of the surrounding contaminated earth 54 and uncontaminated earth 52.

The spacing between adjacent boreholes 57 is based in part on the nature of the contaminating materials and in part on the degree of soil vitrification and solidification required to contain, immobilize, and neutralize those materials.

As plasma arc torch 56 continues to generate heat energy to melt portion 64 and to cure and deplasticize portions 66 and 68 respectively, torch 56 is gradually raised by appropriate mechanisms (not shown). The lifting mechanism for torch 56 is optionally either manually or automatically controlled. Movement of plasma arc torch 56 upwardly in borehole 57 melts and solidifies increasingly higher sections of contaminated earth 54 into a column until torch 56 reaches the top surface of the earth. The molten material 64 occupies substantially less volume than the soil from which it is formed due to the gasification of organic material, elimination of the water in the soil, and the densification caused by the vitrification process. This will result in a significant subsidence in the original ground surface surrounding the borehole 57 as shown in Figure 6. Therefore, the result of the process is, after removal of the torch 56 and cooling of the molten material, a significantly reduced volume of hard, dense rock-like material in a subsided column encompassing the former borehole location.

To completely treat the area affected by the leaching into soil 54 of contaminant 50, an array of holes encompassing the area must be formed. A typical array is that shown in Figure 7 which generally depicts a top plan view of the contaminated soil situation of Figures 5 and 6 after having been drilled and processed with plasma arc torch 56 as discussed above. In the approximate center of Figure 7 is an illustrative surface hazardous waste spill 50 with contaminated area 54 indicated within a dashed line. The spacing of the boreholes 57 in the array of Figure 7 is dependent upon the nature of the soil and the type of contaminant which is present. According to the method of the invention, an initial borehole 57 is drilled and processed with a plasma arc torch 56 so as to determine the actual maximum diameter which can be effectively decontaminated and remediated. The placement of successive boreholes 57 is such that sufficient overlapping of treated material occurs to remediate the entire affected area. In a typical drilling and heat treatment site with increased borehole spacing, cooled vitrified soil mass 70 is shown surrounded by cured brick-like zone 72 and deplasticized zone 74. The final result of the processed array of boreholes 57 is that at least all areas represented by deplasticized zone 74 are coalesced together so that all contaminated earthen material 54 is either gasified, pyrolyzed, vitrified or otherwise immobilized. This resultant remediated soil is no longer harmful and will protect against further spread of the hazardous spill.

A relatively large spacing of boreholes 57 to coalesce the deplasticized zones as described above would be appropriate to treat and remediate soil contamination of simple organic volatile compounds such as petroleum products. The pyrolysis process would rapidly volatilize this contaminant out to the edge of the deplasticized zone 68 of Figure 6 (temperatures greater than 200°C). Medium borehole 57 spacing to coalesce the brick-like zone 66 of treated material (temperatures greater than 900°C) should be considered for such contaminants as organic solids, sludges, or non-organic compounds of low toxicity. Finally, close spacing of boreholes 57 will be required to coalesce the thermally treated columns of the vitrified zone 64, which has been melted by heating to temperatures exceeding 1100°C. The contaminants required to be fully melted, vitrified and immobilized would include highly hazardous/toxic inorganic materials, such as heavy metals, low-level radioactive wastes, and underground deposits of unknown contaminants such as that found in unrecorded, buried metal drums 76 of waste (Figure 8A). Over time, such buried drums are prone to rusting and leakage, causing an area of contaminated soil 54, as is illustrated.

The invention also includes subterranean remediation capabilities unique to plasma arc torch processing of contaminated materials. Principal among these unique capabilities are the ability to operate at any depth underground, selective depth remediation of buried contaminants, and the remediation of contaminants located below the groundwater table. An example of selective remediation is the insertion of the plasma torch 56 directly into an underground storage tank 78 (Figure 8B) which would readily remediate and volatilize all the residual petroleum products in the tank. If necessary, the plasma torch could be operated until the storage tank itself is melted and any surrounding contaminated soil 54, as would seep from break 55, is vitrified or otherwise remediated. The accompanying ground surface subsidence into the cavity of the storage tank would be backfilled with clean material.

If the contaminant situation is one in which leaching has progressed no more than a small distance beneath the surface, e.g. 50 cm or less, it is not typically necessary to drill a hole. Thorough pyrolysis and vitrification can be accomplished with the plasma arc torch suspended a selected distance H above the ground surface, e.g., approximately 30 centimeters for a 1 MW plasma torch and radiating heat downwardly (see Figure 10). In this surface application, the transferred arc torch mode would be the preferred remediation configuration. In the transferred arc mode, a second electrode (not shown) is driven into the ground in the vicinity of the spill to complete the electric circuit. This process is repeated at appropriately spaced locations until the entire spill is remediated. Whether operating above or below ground level, it is practical in many situations to utilize several torches simultaneously and reduce the total time required to remediate the hazardous deposit.

In certain situations, when a spilled or buried contaminant covers a very large area, is leaching rapidly or imminently threatening a water supply, it may be desirable to employ a modified second embodiment of the invention as described below. Correction of such a condition requires the first priority to be the creation of a barrier against further spreading of the seeping, contaminating leachate.

The initial steps of forming a borehole 57 to a depth shown in Figure 6, inserting a thin metal casing (not shown), inserting and energizing a plasma arc torch 56 remain as described above. However, in order to treat an area as quickly as possible according to the modified second embodiment, plasma torch 56 is deenergized after pyrolyzing, melting and solidifying sections 64, 66 and 68 surrounding flame 62; torch 56 is then removed from borehole 57 without gradually being lifted and melting vertically up to the ground surface. Torch 56 is subsequently lowered into each of the other boreholes 57 illustrated in the array of Figure 7 to be energized at or near the same depth so as to create a coalesced horizontal sealant layer 82 (Figure 9) below the depth of the leaching contaminant which layer acts as a non-porous sealant to protect against further vertical leaching. After creation of this sealant layer 82 through treatment of the deepest portions of all holes 57, it may be desirable to reintroduce the plasma torch into each of the peripheral boreholes 57 so as to continue to pyrolyze, melt, and vitrify the soil from the level of the established horizontal sealant layer 82 up to the ground surface, thereby establishing one or more substantially vertical sealant cutoff walls of coalesced columns 80 from the horizontal containment layer up to the ground surface. The result is essentially a vitrified, impermeable set of cutoff walls or a complete sealed basin to prevent further leaching into surrounding soil 52. Following the creation of this barrier, the plasma torch could be reintroduced into the existing boreholes as a lower priority to remediate the entire volume of contaminated material.

As mentioned earlier, even if contaminants have reached the ground water table and are migrating out of the original contaminated area, plasma torch remediation still presents a viable solution. Therefore, once located, the contaminants migrating within the aquifer or underground stream could be readily pyrolyzed and vitrified along with the surrounding media and immobilized from further migration. In the case of any leached contaminant, it is essential to quickly determine the extent of spread of the contamination and to position boreholes 57 accordingly.

The plasma torch soil remediation process of the second embodiment of the invention, because of the very high temperature created, will act to volatilize and pyrolyze the organic contaminants and generate gaseous by-products. The off-gases are collected by means of a hood 61 (Figure 6) and scrubbed or chemically cleaned, as is known. Any residual carbon in the soil, together with the inorganic contaminants, would be melted into a slag which, when cooled, results in a high density, inert vitrified mass, which is not subject to leaching.

### INDUSTRIAL APPLICABILITY

The invention disclosed provides a process with industrial and societal value to overcome a serious problem of current technology. The method of the invention may be utilized to simultaneously decontaminate waste materials and produce useful gas by-products. By enabling the process to be practiced in-situ, the process disclosed is more efficient than prior methods requiring transport of the material to be treated. The process reduces toxic hazards and returns land to other useful functions.

### BEST MODE OF PRACTICING THE INVENTION

The best mode of carrying out the method of the invention herein disclosed involves:
(a) forming a vertical borehole of a size sufficient to accommodate a plasma arc torch extending from an upper surface to a lower end at a predetermined depth in said waste material;
(b) said borehole being formed to a depth at least equal to the depth of said contaminated soil;
(c) inserting a heat destructible casing into said formed borehole prior to lowering said torch therein;
(d) lowering a plasma arc torch together with connected utilities into said formed borehole and suspending the plasma arc torch at a location above and proximate said borehole lower end;
(e) utilizing the connected plasma torch utilities to operate said torch to create a plasma arc flame of sufficient temperature to pyrolyze and melt substantially in the absence of combustion a portion of said waste material located proximate said plasma arc flame;
(f) gradually raising said torch in said borehole so as to melt sequentially higher portions of waste material;
(g) deenergizing the plasma arc torch;
(h) removing the plasma arc torch from the borehole;
(i) allowing said molten waste material to cool and solidify thereby to produce a vitrified residue substantially less in volume than the waste material from which it was produced; and
(j) further forming a plurality of boreholes each at a distance from adjacent boreholes so that the peripheral diameters of solidified materials will coalesce and form a solidified mass throughout the waste material area.

It is understood that the specific embodiments are used herein as examples and are not to be construed as limitations on the scope and principles of the invention as defined in the claims.

## Claims

1. A method of treating waste material (12) in-situ, comprising the steps of:
a) forming a borehole (30) to a predetermined depth in said waste material (12);
b) inserting a plasma arc torch (16) into the borehole (30);
c) energising the plasma arc torch (16) to pyrolyse and vitrify waste material (12) in its vicinity;
d) de-energising the plasma arc torch;
e) removing the plasma arc torch from the borehole; and
f) allowing said molten waste material to cool and solidify thereby to produce a vitrified residue substantially less in volume than the waste matenal from which it was produced.

2. A method according to claim 1, wherein step (b) includes suspending the plasma torch (16) at a location above and proximate the lower end of the borehole (30).

3. A method according to claim 1 or claim 2, wherein the waste material (12) comprises dumped residential and industrial waste products.

4. A method according to claim 1 or claim 2, wherein said waste material (12) compnses soil contaminated by toxic matenal dumped thereon.

5. A method according to any preceding claim, wherein the borehole (30) is formed to a depth at least equal to the depth of the waste matenal (12).

6. A method according to any preceding claim, including the step of inserting a heat destructible casing into the formed borehole pnor to inserting the plasma arc torch (16) therein.

7. A method according to any preceding claim comprising the step of gradually raising the torch (16) in the borehole (3) to melt sequentially higher portions of waste matenal (12).

8. A method according to any preceding claim, wherein the borehole (30) is formed as an initial hole and the method further comprises the steps of lowering, operating, and raising the torch (16) to determine from the initial hole the effective diameter of remediated and vitrified matenal to determine the distance required between said initial hole and a remaining plurality of holes to completely vitrify and remediate the waste matenal (12).

9. A method according to claim 1, further comprising the steps of forming a plurality of boreholes (3), each borehole being formed a distance from an adjacent borehole (30) so that the penpheral diameter of solidified matenal as determined from the initial hole will coalesce and form a solidified mass throughout the waste matenal (12).

10. A method according to any preceding claim, including the step of operating the plasma torch (16) in a non-transferred arc mode.

11. A method according to any of claims 1 to 9, including the step of operating the plasma torch (16) in a transferred arc mode.

12. A method according to claim 3, including the steps of operating the plasma arc torch (16) to melt a portion of the contaminated soil (54) only at the lowest depth to which the borehole (57) is formed; removing the plasma arc torch (56) from the borehole (57), and operating the process in each of a plurality of boreholes (57) to form a coalesced and non-porous horizontal sealant layer to prevent further vertical leaching of contaminants to surrounding soil and aquifers.

13. A method of treating hazardous waste (50) contaminated soil (54), the contamination extending to only a shallow depth below the surface of the soil, compnsing:
(a) suspending a plasma arc torch above the contaminated soil;
(b) energising the plasma arc torch (56) to pyrolyse and vitrify the contaminated soil in its vicinity;
(c) de-energising the plasma arc torch;
(d) removing the plasma arc torch from the borehole, and
(e) allowing said molten waste matenal to cool and solidify thereby to produce a vitrified residue substantially less in volume than the waste material from which it was produced.

14. A method according to claim 12 or 13, including the step of moving the plasma arc torch (56) to additional adjacent locations above the contaminated soil (54) and pyrolysing and vitrifying the contaminated soil (54) in said adjacent locations.

15. A method according to claim 12, wherein a gas collecting hood (32) covers the top of the formed boreholes.

16. A method according to claim 15, comprising the step of raising the plasma torch (56) in the borehole (30) to operate at a new level.

17. A method according to claim 1, wherein the formed borehole (30) is substantially vertical.

## Patentansprüche

1. Verfahren zur Behandlung von Abfallstoffen (12) in situ, umfassend die Schritte:
a) Bilden eine Bohrlochs (30) einer vorbestimmten Tiefe in dem Abfallstoff (12);
b) Einführen eines Plasmabogenbrenners (16) in das Bohrloch (30) hinein;
c) Einschalten des Plasmabogenbrenners (16) zum Pyrolysieren und zum Verglasen der Abfallstoffe (12) in dessen Umgebung;
d) Ausschalten des Plasmabogenbrenners;
e) Entfernen des Plasmabogenbrenners von dem Bohrloch; und
f) Ermöglichen dem geschmolzenen Abfallstoff zu kühlen und zu verfestigen, wodurch ein verglaster Rückstand mit deutlich geringerem Volumen entsteht, als der Abfallstoff, aus dem er erzeugt wurde.

2. Verfahren nach Anspruch 1, wobei Schritt (b) das Aufhängen des Plasmabrenners (16) an einer Stelle oberhalb und in der Nähe des unteren Ende des Bohrlochs umfaßt.

3. Verfahren nach Anspruch 1 oder 2, wobei die Abfallstoffe (12) Hausmüll und industrielle Abfallprodukte aufweisen.

4. Verfahren nach Anspruch 1 oder 2, wobei die Abfallstoffe (12) mit Giftstoffen verseuchten Boden aufweisen, der auf sie gekippt wurde.

5. Verfahren nach einem der vorangegangenen Ansprüche, wobei das Bohrloch (30) eine Tiefe aufweist, die wenigstens der Tiefe der Abfallstoffe (12) entspricht.

6. Verfahren nach einem der vorangegangenen Ansprüche, einschließlich dem Schritt des Einführens eines durch Hitze zerstörbaren Gehäuses in das gebildete Bohrloch vor dem Einführen des Plasmabogenbrenners (16) darin hinein.

7. Verfahren nach einem der vorangegangenen Ansprüche, umfassend den Schritt des allmählichen Anhebens des Brenners (16) in dem Bohrloch (30) um nacheinander höhere Bereiche der Abfallstoffe (12) zu schmelzen.

8. Verfahren nach einem der vorangegangenen Ansprüche, wobei das Bohrloch (30) als ursprüngliches Loch gebildet ist und das Verfahren weiter die Schritte Absenken, Betreiben und Anheben des Brenners (16) umfaßt, um von dem ursprünglichen Loch den effektiven Durchmesser des verbesserten und verglasten Materials zu bestimmen, um die benötigte Distanz zwischen dem ursprünglichen und einer verbleibenden Vielzahl von Löchern zu bestimmen, um die Abfallstoffe (12) vollständig zu verglasen und zu verbessern.

9. Verfahren nach Anspruch 1, ferner umfassend die Schritte des Bildens einer Vielzahl von Bohrlöchern (30), wobei jedes Bohrloch unter einem Abstand von einem benachbarten Bohrloch (30) gebildet wird, so daß der Umfangsdurchmesser des verfestigten Materials bezüglich des ursprünglichen Bohrlochs eine Verbindung eingeht und eine verfestigte Masse durch den gesamten Abfallstoff (12) hindurch bildet.

10. Verfahren nach einem der vorangegangenen Ansprüche, einschließlich dem Schritt des Betreibens des Plasmabrenners (16) in einem Nicht-Übertragungs-Bogen-Modus.

11. Verfahren nach einem der Ansprüche 1 bis 9, einschließlich dem Schritt des Betreibens des Plasmabrenners (16) in einem Übertragungs-Bogen-Modus.

12. Verfahren nach Anspruch 3, einschließlich der Schritte Betreiben des Plasmabogenbrenners (16), um einen Bereich des verseuchten Bodens (54) nur an der tiefsten Stelle, bis zu der das Bohrloch (57) reicht, zu schmelzen; Entfernen des Plasmabogenbrenners (56) von dem Bohrloch (57), und Durchführen des Prozesses in jedem einer Vielzahl von Bohrlöchern (57), um eine miteinander verbundene und nicht poröse, horizontale Dichtungs-Schicht zu bilden, um weiteres vertikales Lecken von Verunreinigungen in benachbarten Boden und Wasserschichten zu verhindern.

13. Verfahren zur Behandlung von mit Sondermüll (50) kontaminiertem Boden (54), wobei die Kontaminierung lediglich bis zu geringen Tiefen unterhalb der Bodenoberfläche reicht, umfassend:
a) Aufhängen eines Plasmabogenbrenners über dem kontaminierten Boden;
b) Anschalten des Plasmabogenbrenners (56), um den verseuchten Boden in seiner Umgebung zu pyrolisieren und zu verglasen;
c) Abschalten des Plasmabogenbrenners;
d) Entfernen des Plasmabogenbrenners von dem Bohrloch, und
e) Ermöglichen dem geschmolzenen Material abzukühlen und zu verfestigen, wodurch ein verglaster Rückstand mit deutlich geringerem Volumen entsteht, als der Abfallstoff, aus dem er entstand.

14. Verfahren nach Anspruch 12 oder 13, einschließlich dem Schritt Bewegen des Plasmabogenbrenners (56) zu zusätzlichen benachbarten Stellen oberhalb des verseuchten Bodens (54) und dem Pyrolisieren und Verglasen des kontaminierten Bodens (54) an den benachbarten Stellen.

15. Verfahren nach Anspruch 12, wobei eine Gas-Sammel-Haube (32) die Spitze der gebildeten Bohrlöcher abdeckt.

16. Verfahren nach Anspruch 15, umfassend den Schritt Anheben des Plasmabrenners (56) in dem Bohrloch, um ihn auf einem neuen Niveau zu betreiben.

17. Verfahren nach Anspruch 1, wobei das gebildete Bohrloch (30) im wesentlichen vertikal ist.

## Revendications

1. Une méthode pour le traitement de déchets (12) in situ, comprenant les étapes consistant à :
a) forer un trou (30) jusqu'à une profondeur déterminée dans lesdits déchets (12) ;
b) insérer une torche à plasma (16) dans le trou foré (30) ;
c) exciter la torche à plasma (16) de manière à pyrolyser et vitrifier les déchets (12) situés dans son voisinage ;
d) désexciter la torche à plasma ;
e) extraire la torche à plasma du trou foré ; et
f) laisser lesdits déchets fondus refroidir et se solidifier de manière à produire ainsi un résidu vitrifié ayant un volume sensiblement inférieur à celui des déchets à partir desquels il a été produit.

2. Une méthode selon la revendication 1, dans laquelle l'étape b) consiste à suspendre la torche à plasma (16) en un emplacement situé au-dessus et à proximité de l'extrémité inférieure du trou foré (30).

3. Une méthode selon la revendication 1 ou la revendication 2, dans laquelle les déchets (12) consistent en des déchets résidentiels ou industriels déchargés.

4. Une méthode selon la revendication 1 ou la revendication 2, dans laquelle les déchets (12) consistent en un sol contaminé par des matières toxiques déchargées sur lui.

5. Une méthode selon l'une quelconque des revendications précédentes, dans laquelle le trou (30) est foré à une profondeur au moins égale à l'épaisseur des déchets (12).

6. Une méthode selon l'une quelconque des revendications précédentes, comprenant l'étape consistant à insérer un cuvelage destructible par la chaleur dans le trou foré avant d'y insérer la torche à plasma (16).

7. Une méthode selon l'une quelconque des revendications précédentes, comprenant l'étape consistant à relever progressivement la torche (16) dans le trou foré (30) de manière à fondre successivement des portions plus élevées des déchets (12).

8. Une méthode selon l'une quelconque des revendications précédentes, dans laquelle le trou (30) est foré sous forme d'un trou initial, et la méthode comprend les étapes suivantes consistant à abaisser, faire fonctionner et relever la torche (16) de manière à déterminer, à partir du trou initial, le diamètre effectif de la matière traitée et vitrifiée, et à déterminer la distance nécessaire entre ledit trou initial et une pluralité restante de trous pour complètement vitrifier et traiter les déchets (12).

9. Une méthode selon la revendication 1, comprenant au surplus les étapes consistant à forer une pluralité de trous (30), chaque trou foré étant formé à une distance d'un trou foré adjacent (30) telle que le diamètre périphérique de matière solidifiée, tel que déterminé depuis le trou initial, va se réunir par coalescence et former une masse solidifiée dans l'ensemble des déchets (12).

10. Une méthode selon l'une quelconque des revendications précédentes, incluant l'étape consistant à faire fonctionner la torche à plasma en mode à arc non-transféré.

11. Une méthode selon l'une quelconque des revendications 1 à 9, incluant l'étape consistant à faire fonctionner la torche à plasma en mode à arc transféré.

12. Une méthode selon la revendication 3, incluant les étapes consistant à faire fonctionner la torche à plasma (16) de manière à ne fondre une portion du sol contaminé (54) qu'à la plus basse profondeur à laquelle le trou (57) a été foré ; à extraire la torche à plasma (56) du trou foré (57) et à mettre en oeuvre le procédé dans chacun d'une pluralité de trous forés (57), de manière à former une couche étanchéisante horizontale non poreuse par coalescence, de manière à empêcher tout autre lessivage vertical de contaminants vers le sol et les matériaux aquifères environnants.

13. Une méthode pour le traitement d'un sol (54) contaminé par des déchets dangereux (50), la contamination ne s'étendant qu'à une profondeur superficielle au-dessous de la surface du sol, comprenant les étapes consistant à :
a) suspendre une torche à plasma au-dessus du sol contaminé ;
b) exciter la torche à plasma (56) de manière à pyrolyser et vitrifier le sol contaminé dans son voisinage ;
c) désexciter la torche à plasma ;
d) extraire la torche à plasma du trou foré ; et
e) laisser les déchets fondus refroidir et se solidifier de manière à produire ainsi un résidu vitrifié d'un volume sensiblement inférieur à celui des déchets à partir desquels il a été produit.

14. Une méthode selon la revendication 12 ou 13, incluant l'étape consistant à déplacer la torche à plasma (56) vers des emplacements voisins additionnels au-dessus du sol contaminé (54), et pyrolyser et vitrifier le sol contaminé (54) dans lesdits emplacements voisins.

15. Une méthode selon la revendication 12, dans laquelle une hotte de captation des gaz recouvre le sommet des trous forés.

16. Une méthode selon la revendication 15, comprenant l'étape consistant à relever la torche à plasma (56) dans le trou foré (30) de manière à la faire fonctionner à un nouveau niveau.

17. Une méthode selon la revendication 1, dans laquelle le trou foré (30) est sensiblement vertical.
